## Europäisches Patentamt

## European Patent Office

## Office européen des brevets

(11) Publication number: **0 006 685**
**B2**

(12) **NEW EUROPEAN PATENT SPECIFICATION**

(45) Date of publication of the new patent
specification: **08.02.89**

(51) Int. Cl.⁴: **C 08 G 63/22, C 08 G 18/42**

(21) Application number: **79300891.3**

(22) Date of filing: **21.05.79**

(54) Process for the manufacture of polyester polyols.

(30) Priority: **24.05.78 GB 2174178**

(43) Date of publication of application:
**09.01.80 Bulletin 80/01**

(45) Publication of the grant of the patent:
**12.01.83 Bulletin 83/02**

(45) Mention of the opposition decision:
**08.02.89 Bulletin 89/06**

(84) Designated Contracting States:
**DE FR GB IT**

(56) References cited:
DE-A-1 720 848
DE-A-2 011 050
DE-A-2 554 220
GB-A- 804 839
GB-A- 882 603
GB-A-1 142 770
GB-A-1 309 694
GB-A-1 475 541
GB-A-1 522 889

**Organikum, VEB Deutscher Verlag der
Wissenschaften, Berlin, 1976, 15. Auflage, page
502**

(73) Proprietor: **IMPERIAL CHEMICAL INDUSTRIES
PLC
Imperial Chemical House Millbank
London SW1P 3JF (GB)**

(72) Inventor: **Corry, Alfred Reginald
57 Bowerfold Lane
Heaton Norris Stockport, SK4 2LU (GB)**

(74) Representative: **Stephenson, Kenneth et al
Imperial Chemical Industries PLC Legal
Department: Patents PO Box 6 Bessemer Road
Welwyn Garden City Herts, AL7 1HD (GB)**

(56) References cited:
**Organische Chemie, Fieser and Fieser, 2.
Auflage, Verlag Chemie GmbH, 1968, pp.
442-443**

**Organic Chemistry of Synthetic High Polymers,
Interscience Publishers, 1967, pp. 53-56 and
81-84**

**Präparative Methoden der Polymeren-Chemie,
Sorenssen and Campbell, Verlag Chemie
GmbH, 1982, pp. 111-112**

EP 0 006 685 B2

## Description

This application relates to polymeric materials and more particularly to a process for the manufacture of polyester polyols.

It is known to make polyester polyols by a transesterification reaction between a polyol such as ethylene glycol and a lower alkyl ester of a polycarboxylic acid, for example a dimethyl ester of a dicarboxylic acid. In the course of the reaction, the lower alkanol, formed by the splitting of the lower alkyl ester, is displaced from the reaction mixture and the polyester of the polyol and the polycarboxylic acid is formed.

In order to form a polyester having hydroxyl end-groups, an equivalent excess of polyol is employed relative to the lower alkyl ester of the dicarboxylic acid, the molecular weight of the polyester being controlled by the amount of the excess. Towards the end of the reaction when the concentration of reactive species is low, the rate of reaction is low and the final traces of lower alkoxy groups can be difficult to remove even in the presence of conventional transesterification catalysts. For some purposes, the presence of alkylated end groups in the polyester in addition to hydroxyl groups is unimportant but for other purposes, for example where the polyester is to be used as a reactive entity such as in the preparation of polyurethanes, it is desirable to replace the residual alkylated end groups by hydroxyl (or carboxyl) groups as completely as possible.

The present invention provides a means of maximising the conversion of the residual lower alkoxy residues to hydroxyl or carboxyl groups.

According to the invention, there is provided a process for the manufacture of a polyester polyol which comprises reacting an organic polyol with a lower alkyl ester of an aliphatic polycarboxylic acid and removing lower alkanol from the reaction mixture as it is formed and, towards the end of the reaction, adding an organic polyol or an aliphatic polycarboxylic acid to the reaction mixture and then continuing the reaction to the desired extent.

Up to the point where the organic polyol or polycarboxylic acid is added to the reaction mixture, the process of the invention may be carried out in a completely conventional manner.

Thus, the initial charge of organic polyol and polycarboxylic acid ester is heated in a conventional reactor at temperatures up to a maximum governed by the thermal stability of the reactants and product. Suitable maximum temperatures are in the range 200—250°C and the reaction may be assisted by the inclusion of a known transesterification catalyst, for example tetra-*n*-butyl *ortho*titanate. It is usual to facilitate the reaction by taking steps to remove the by-product alkanol such as purging with an inert gas, for example nitrogen or carbon dioxide which may be combined with the application of reduced pressure especially towards the end of the reaction. The reaction mixture should be well agitated and it is useful if the agitation results in a fine dispersion of the inert gas stream. When volatile starting materials are used, it is necessary to minimise their loss from the reactor with the alkanol being displaced and, for this purpose, fractionating devices are usually employed on the reactor vapour outlet, especially in the early stages of the reaction.

Any lower alkyl ester of an aliphatic polycarboxylic acid may be employed in the process of the present invention or any mixture of such esters, the term "lower alkyl" in this connection meaning an alkyl group having from one to four carbon atoms. Clearly, however, the invention is of greatest applicability to those esters which are commercially available, especially di(lower alkyl esters of aliphatic dicarboxylic acids. It is convenient to isolate some aliphatic dicarboxylic acids in the form of their di(lower alkyl), especially dimethyl, esters and these may conveniently be used in the process of the invention. The aliphatic dicarboxylic acids in question include succinic, glutaric, adipic, suberic, azelaic and sebacic acids, and mixtures of such acids. Of special importance because of their availability are mixtures of the dimethyl esters of adipic, glutaric and succinic acids, especially those mixtures containing from 8 to 50% of the adipate, from 40 to 91% of the glutarate and from 1 to 46% of the succinate, the percentages being on a weight basis.

Any organic polyol or mixture of polyols may be employed as a starting material in the process of the invention. Thus, the polyol may be an aliphatic diol, for example ethylene glycol, 1,2-propylene glycol, diethylene glycol or 1,4-butane diol or it may be a polyol of higher functionality, for example glycerol, trimethylolpropane or pentaerythritol. Useful polyol mixtures include diol mixtures and mixtures of a diol with a polyol of higher functionality.

The relative proportions of organic polyol and polycarboxylic acid ester present in the initial charge may be varied in known manner to form a polyester polyol having the desired molecular weight. Thus, in theory, a reaction mixture containing x moles of dicarboxylic acid ester and x+1 moles of a glycol loses 2x moles of lower alkanol to form a polyester polyol containing, on average, x dicarboxylic acid residues and x+1 glycol residues. In practice, however, some allowance must be made for the loss of volatile components such as glycols from the reaction mixture. The amount of such loss depends upon the plant design and operating conditions and can be determined by simple trial. The process of the invention may be used for the preparation of polyester polyols having molecular weights of from 300 to 10,000 and especially from 1,000 to 5,000.

An indication of the reaction rate can be obtained by observing the rate of evolution of lower alkanol from the reaction mixture. In the early stages of the reaction, the lower alkanol is evolved copiously and the temperature at the head of the vapour outlet corresponds to the boiling point of the alkanol. After a time, the evolution of lower alkanol slows down even though the temperature of the reaction mixture is being raised until, eventually, the head temperature starts to fall because so little alkanol is being evolved. The rate of reaction can also be checked by determining the alkoxyl content of the reaction mixture. Towards the end of the reaction, the alkoxyl content is low but is changing only slowly. If the reaction was allowed to continue in this way, the alkoxyl content would continue to fall but the time required is undesirably long from the point of view of economic plant operation.

It is at this stage, when the rate of evolution of lower alkanol is very low and the alkoxy content of the reaction mixture is changing very slowly, that a quantity of organic polyol or aliphatic polycarboxylic acid (or anhydride thereof) is added to the reaction mixture. The result of this addition is to accelerate the displacement of lower alkanol from the reaction mixture so that the reaction reaches an acceptable completion stage in a commercially acceptable time.

The amount of the polyol or polycarboxylic acid added to the reaction mixture is not critical since any excess polyol can be removed by distillation, under reduced pressure if necessary. Excess polycarboxylic acid can be compensated for in the initial polyol charge. In general, a suitable amount is 2—10% by weight based on the weight of reaction mixture.

A transesterification catalyst may optionally be added with the polyol or polycarboxylic acid.

It is preferable though not essential that any polyol added to the reaction mixture is identical with the polyol present in the initial reaction mixture. Similarly, it is preferable though not essential that any aliphatic polycarboxylic acid added to the reaction mixture is identical with the aliphatic polycarboxylic acid from which the lower alkyl ester, used as starting material is derived.

The polyester polyols made by the process of the present invention are particularly useful in the manufacture of polyurethanes which may take any of the usual forms, for example elastomers, microcellular elastomers, foams, coatings, rigid plastics etc. The polyurethanes may be made by reacting the polyester polyols with organic polyisocyanates using any of the preparative techniques described in the prior art. It is important for polyurethane manufacture that the polyester chains should not have a significant number of end groups, such as methoxy or carbomethoxy, which are not reactive towards isocyanate groups. The present invention provides polyester polyols in which the presence of such end groups is minimal so reducing the possibility of an undesirable plasticisation of the derived polyurethanes.

The process of the invention is particularly useful for the preparation of polyester diols having molecular weights of approximately 1800—2200 by the reaction of ethylene glycol with a mixture of the dimethyl esters of adipic, glutaric and succinic acids. The polyesters so made are valuable for use in the manufacture of microcellular elastomers suitable as shoe soles.

The invention is illustrated but not limited by the following Examples 1 and 2 in which all parts and percentages are by weight. Examples 3 and 4 are for the purpose of comparison.

Example 1

5139,2 Parts of a distilled mixture of the dimethyl esters of adipic, glutaric and succinic acids in w/w ratio approximately 12.3:85.0:2.3; 2185.6 parts of ethylene glycol and 0.23 parts of tetra-n-butyl ortho titanate were heated together in a stainless steel agitated vessel with a stream of nitrogen passing through the reactants. At 150°C methyl alcohol started to evolve.

The mixture was held at a temperature of 170°C for about 7 hours during which time about 70—80% of the theoretical amount of methyl alcohol was recovered. The temperature was then raised to 230°C. After about 3 hours at 230°C, 51.7 parts of ethylene glycol and 0.23 parts of tetra-n-butyl orthotitanate were added and the reaction mixture condensed further, vacuum being applied as necessary until the required degree of condensation had occurred.

The polyester was a pale yellow, clear, liquid having a viscosity at 100°C of $200 \times 10^{-6}$ $m^2/s$, a hydroxyl number of 56.4 mg KOH/g, an acid number of 0.35 mg KOH/g and a methoxyl content of 0.07% expressed as methyl alcohol. 82.8 parts of the polyester were used to formulate a polyol composition by mixing with 15.1 parts of 1,4-butanediol, 0.7 parts of triethyl diamine, 0.4 parts of water and 1.05 parts of Silicone L.5340, a silicone surfactant marketed by Union Carbide. This polyol composition at 40°C was mixed with 104.6 parts of a prepolymer preheated to 45°C. The prepolymer having an isocyanate content of 18.1% was formed by reacting 61.2 parts of 4,4'-diphenylmethanediisocyanate, 1.5 parts of crude diphenylmethane diisocyanate, 0.018 parts of benzoyl chloride and 42.9 parts of poly(ethylene adipate) having an hydroxyl value of 56.0 mg KOH/g and negligible acid value. The optimum ratio of polyol mixture to prepolymer in parts by weight to achieve a demould time of 4 minutes was determined by inspection of several hand mixes.

The reacting mixture was poured into a steel mould of dimensions 109 mm × 18 mm × 280 mm preheated to 50°C and having a closable lid. After 4 minutes the microcellular elastomer was removed from the mould and conditioned at ambient temperature for 2 days. The elastomer had the following physical properties.

| Density (g/cc) | 0.60 |
| Tensile Strength (KN/m²) | 8500 |
| Split tear strength (N/m) | 5000 |
| Elongation to break (%) | 430 |
| Hardness (Shore A) | 74 |

The crude diphenylmethane diisocyanate used in this Example contained approximately 55% of diisocyanatodiphenylmethane isomers, the bulk of the remainder of the isocyanate being present as polymethylene polyphenyl polyisocyanates of functionality greater than two, and had an NCO content of 30.7%.

## Example 2

5139.2 Parts of a distilled mixture of the dimethyl esters of adipic, glutaric and succinic acids in w/w ratio approximately 12.3:85.0:2.3; 2210.4 parts of ethylene glycol and 0.23 parts of tetra-n-butyl *ortho* titanate were heated together in a stainless steel agitated vessel with a stream of nitrogen passing through the reactants. At 150°C methyl alcohol started to evolve.

The mixture was held at a temperature of 170°C for about 7 hours during which time about 70—80% of the theoretical amount of methyl alcohol was recovered. The temperature was raised to 230°C. After 3 hours at 230°C, 58.4 parts of adipic acid were added and the reaction mixture condensed further with vacuum applied as necessary, until the required degree of condensation had occurred.

The polyester, a pale yellow clear liquid had a viscosity at 100°C of $206 \times 10^{-6}$ $m^2$/s, a hydroxyl number of 0.11 mg KOH/g and a methoxyl content of 0.135% when expressed as methyl alcohol. 82.8 parts of the polyester were formulated into a polyol composition and used to prepare a microcellular elastomer using 104.6 parts of prepolymer and the same procedure as that described in Example 1. The resulting microcellular elastomer had the following physical properties.

| | |
|---|---|
| Density (g/cc) | 0.63 |
| Tensile Strength (KN/$m^2$) | 6500 |
| Split tear strength (N/m) | 4600 |
| Elongation to break (%) | 420 |
| Hardness (Shore A) | 68 |

## Example 3

125.5 parts of a distilled mixture of the dimethyl esters of adipic, glutaric and succinic acids in weight/weight ratio 6.8:89:4.2; 53.5 parts of ethylene glycol and 0.0055 parts of tetra-*n*-butyl *ortho* titanate were reacted in the manner described in Example 1. No additions of adipic acid of ethylene glycol were made during this reaction.

The resulting polyester had the following characteristics.

It was a pale yellow clear liquid having viscosity at 100°C of $187 \times 10^{-6}$ $m^2$/s and at 25°C of 12.6 Ns/$m^2$. It had a hydroxyl value of 50.64 mg KOH/g and an acid value of 0.08 mg KOH/g; its methoxyl content was 0.49% when expressed as methyl alcohol.

The optimum ratio of a resin blend containing the above polyester to prepolymer was determined by inspection. Machine trials failed to achieve a demould time under ten minutes. The resulting microcellular elastomer was distorted too much for physical measurements to be meaningful.

## Example 4

A polyester was prepared in the manner described in Example 1 except that no additions of ethylene glycol, tetra-n-butyl ortho titanate or adipic acid were made after the start of the reaction.

The polyester a pale yellow clear liquid had a viscosity at 100°C of $172 \times 10^{-6}$ $m^2$/s and a viscosity at 25°C of 113.5 Ns/$m^2$. It had a hydroxyl value of 50.76 mg KOH/g and an acid value of 0.13 mg KOH/g; its methoxyl content expressed as % methyl alcohol was 0.6%.

A microcellular elastomer was prepared by the method described previously. A demould time of under 10 minutes could not be achieved. The elastomer was too distorted for physical measurements to be meaningful.

**Claims**

1. A process for the manufacture of a polyester polyol which comprises reacting an organic polyol with an alkyl ester of an aliphatic polycarboxylic acid, in which the alkyl group of the ester moiety contains from 1 to 4 carbon atoms, and removing alkanol from the reaction mixture as it is formed, the organic polyol and the alkyl ester being reacted in substantially stoichiometric amounts having regard to the desired average molecular weight of the polyol and allowing for the loss of volatile components characterised in that towards the end of the reaction an organic polyol or an aliphatic polycarboxylic acid is added to the reaction mixture, the reaction then being continued to the desired extent.

2. A process as claimed in claim 1 wherein the alkyl ester of an aliphatic polycarboxylic acid is a mixture of the dimethyl esters of adipic, glutaric and succinic acids.

3. A process as claimed in claim 2 wherein the mixture contains from 8 to 50% of dimethyl adipate, from 40 to 91% of dimethyl glutarate and from 1 to 46% of dimethyl succinate, the percentages being on a weight basis.

4. A process as claimed in any one of the preceding claims wherein the amount of organic polyol or polycarboxylic acid added is from 2 to 10% by weight based on the weight of reaction mixture.

5. A process as claimed in any one of the preceding claims wherein ethylene glycol is reacted with a mixture of dimethyl esters of adipic, glutaric and succinic acids to give a polyester diol having a molecular weight of approximately 1800—2200.

**Patentansprüche**

1. Verfahren zur Herstellung eines Polyesterpolyols, bei welchem ein organisches Polyol mit einem Alkylester einer aliphatischen Polycarbonsäure, in welchem die Alkylgruppe des Esterteils 1 bis 4 Kohlenstoffatome enthält, umgesetzt wird und das Alkanol aus dem Reaktionsgemisch während seiner Bildung entfernt wird, wobei das organische Polyol und der Alkylester in im wesentlichen stöchiometrischen Mengen hinsichtlich des gewünschten durchschnittlichen Molekulargewichts des Polyols umgesetzt werden und Verluste von flüchtigen Bestandteilen berücksichtigt werden, dadurch gekennzeichnet, daß gegen Ende der Reaktion ein organisches Polyol oder eine aliphatische Polycarbonsäure dem Reaktionsgemisch zugegeben wird und die Reaktion dann bis zum gewünschten Ausmaß fortgesetzt wird.

2. Verfahren nach Anspruch 1, bei welchem der Alkylester einer aliphatischen Polycarbonsäure ein Gemisch aus den Dimethylestern von Adipin-, Glutar- und Bernsteinsäure ist.

3. Verfahren nach Anspruch 2, bei welchem das Gemisch 8 bis 50% Dimethyladipat, 40 bis 91% Dimethylglutarat und 1 bis 46% Dimethylsuccinat enthält, wobei sich die Prozentsätze auf das Gewicht beziehen.

4. Verfahren nach einem der vorhergehenden Ansprüche, bei welchem die zugesetzte Menge des organischen Polyols oder der Polycarbonsäure 2 bis 10 Gew.-%, bezogen auf das Gewicht des Reaktionsgemisches, beträgt.

5. Verfahren nach einem der vorhergehenden Ansprüche, bei welchem Äthylenglycol mit einem Gemisch der Dimethyl-ester von Adipin-, Glutar- und Bernsteinsäure umgesetzt wird, um ein Polyesterdiol mit einem Molekulargewicht von annähernd 1800 bis 2200 herzustellen.

**Revendications**

1. Procédé pour la préparation d'un polyester-polyol, qui consiste à faire réagir un polyol organique avec un ester alkylique d'un acide polycarboxylique aliphatique, dans lequel le groupe alkyle de la portion ester contient 1 à 4 atomes de carbone, et à éliminer l'alcanol du mélange réactionnel à mesure de sa formation, le polyol organique et l'ester alkylique étant amenés à réagir en quantités pratiquement stoechiométriques en considérant le poids moléculaire moyen désiré du polyol et en tenant compte de la perte de composants volatils, caractérisé en ce que, vers la fin de la réaction, on ajoute un polyol organique ou un acide polycarboxylique aliphatique au mélange réactionnel, puis on poursuit la réaction jusqu'au degré désiré.

2. Procédé suivant la revendication 1, dans lequel l'ester alkylique d'un acide polycarboxylique aliphatique est un mélange des esters diméthyliques des acides adipique, glutarique et succinique.

3. Procédé suivant la revendication 2, dans lequel le mélange contient 8 à 50% d'adipate de diméthyle, 40 à 91% de glutarate de diméthyle et 1 à 46% de succinate de diméthyle, les pourcentages étant exprimés sur base pondérale.

4. Procédé suivant l'une quelconque des revendications précédentes, dans lequel la quantité de polyol organique ou d'acide polycarboxylique ajoutée va de 2 à 10% en poids sur la base du poids du mélange réactionnel.

5. Procédé suivant l'une quelconque des revendications précédentes, dans lequel de l'éthylèneglycol est amené à réagir avec un mélange d'esters diméthyliques d'acides adipique, glutarique et succinique pour former un polyester-diol ayant un poids moléculaire d'environ 1800 à 2200.